# EUROPÄISCHE PATENTSCHRIFT

(11) **EP 0 518 053 B1**
(45) Veröffentlichungstag und Bekanntmachung des Hinweises auf die Patenterteilung: **18.01.1995**
(21) Anmeldenummer: 92107843.2
(22) Anmeldetag: 09.05.1992
(51) Int. Cl.: B31F 1/28, B32B 31/04

(54) **Verfahren zur Herstellung bedruckter Wellpappe in grosser Arbeitsbreite sowie Anlage zur Durchführung des Verfahrens**
Method and apparatus for producing printed corrugated cardboard in large working widths
Procédé et appareil pour la fabrication de carton ondulé imprimé de grande largeur

(30) Priorität: 08.06.1991 DE 4118969
(43) Veröffentlichungstag der Anmeldung: 16.12.1992
(73) Patentinhaber: Thimm Verpackung GmbH + Co., D-37154 Northeim (DE)
(72) Erfinder: Welschlau, Udo, Dipl.-Ing, D-37154 Northeim (DE); Becker, Wolfgang, Dipl.-Ing, D-37589 Kalefeld (DE)
(74) Vertreter: Rehberg, Elmar, Dipl.-Ing.

(56) Entgegenhaltungen:
- EP-A- 0 162 139
- DE-A- 1 704 657
- DE-A- 3 439 374
- GB-A- 1 061 146
- US-A- 4 288 273
- "VERPACKUNGSWIRTSCHAFT", Januar 1966, AT, Seite 8, Dr. Helga Bröll: "Wellpappe als Packstoff"

## Beschreibung

Die Erfindung bezieht sich auf ein Verfahren zur Herstellung bedruckter Wellpappe in großer Arbeitsbreite, und zwar mit den im Oberbegriff des Anspruchs 1 angegebenen Verfahrensschritten. Es wird weiterhin eine Anlage zur Herstellung bedruckter Wellpappe mit den Merkmalen des Oberbegriffs des Anspruchs 6 aufgezeigt. Unter einer großen Arbeitsbreite wird eine Breite in der Größenordnung von 2000 bis 2500 mm verstanden.

Ein Verfahren zur Herstellung bedruckter Wellpappe der beschriebenen Art sowie eine Anlage zur Herstellung solcher bedruckter Wellpappe ist aus der DE-A- 34 39 374 bekannt. Es ist ein Verfahren zur Herstellung von Wellpappe gezeigt, bei dem mehrere - in der Regel zwei - äußere Teil-Deckbahnen, die Teilarbeitsbreite aufweisen und sich zur Arbeitsbreite ergänzen, zuvor separat bedruckt und gemeinsam in der Wellpappenanlage von der Rolle abgezogen und gemeinsam kaschiert werden. Die die Teil-Deckbahnen ergebenden Rollen müssen dabei relativ zu der Bahn aus Oberbahn und Wellenlage so orientiert sein, daß der Zwischenraum zwischen den Teil-Decklagen in der Wellpappenanlage unverändert beibehalten wird. Um die Relativlage der miteinander zu kaschierenden Bahnen zu erreichen, wird die Bahn aus Oberbahn und Wellenbahn mit einer Steuereinrichtung in die entsprechende Relativlage zu den Teil-Deckbahnen gebracht. Die Breite des Zwischenraums, in welchem die Teil-Deckbahnen durch die Maschine geführt werden, beträgt im allgemeinen 1 bis 15 cm. Die Wellenbahn wird in diesem Bereich vor dem Zusammenbringen mit den Teil-Deckbahnen durch eine gesonderte Quetschvorrichtung so zusammengequetscht, daß die gequetschte Stelle außer Kontakt zu einer Rolle kommen, die dem Leimauftrag vor dem Kaschieren dient. Der dem Zwischenraum entsprechende Teil der Bahn wird in Längsrichtung durchschnitten und als Abfall ausgeschieden. Auf diese Art und Weise wird freiliegender Leim im Zwischenraum vermieden und der störungsfreie Betrieb der Wellpappenanlage sowie der nachgeschalteten Einrichtungen erreicht. Nachteilig ist der dabei entstehende Abfall. Weiterhin ist es nicht einfach, die Teil-Deckbahnen bei ihrem Lauf durch die Wellpappenanlage in einem konstanten Zwischenraum zueinander zu halten, der durch die Orientierung der Rollen relativ zur Bahn vorgegeben ist. Die beiden Rollen für die Teil-Deckbahnen können auch auf einem gemeinsamen Dorn angeordnet sein, der in einem der beiden Abrollständer gehaltert ist.

Anlagen zur Herstellung von Wellpappe sind auch mit der eingangs genannten großen Arbeitsbereite bekannt. Sie weisen Abwickelstationen für die verschiedenen Papierbahnen, ein oder mehrere Wellaggregate mit je einer Beleimungseinheit sowie eine Kaschierwerk und nachgeschaltete Längs- und Querschneider auf. Das Kaschierwerk selbst besitzt eine Beleimungsstation und eine nachgeschaltete Heiz- und Zugpartie, in welcher die einseitige Wellpappe mit der Unterbahn zusammengeführt wird. Wenn bedruckte Wellpappe hergestellt werden soll, wird die Papierbahn, die die betreffende bedruckte Oberfläche an der Wellpappe abgibt, in einem vorgeschalteten Arbeitsschritt in einer Rotationsdruckmaschine bedruckt (vgl. z. B. Verpackungswirtschaft Januar 1966, insbesondere S. 8) und dann in der Wellpappenanlage von der Rolle abgezogen und den anderen Bahnteilen hinzugefügt. Die Rotationsdruckmaschine besitzt dabei die gleiche Arbeitsbreite wie die Anlage zur Herstellung der Wellpappe. Die Rotationsdruckmaschine weist einen Gegendruckzylinder auf, der abhängig von der großen Arbeitsbreite in der Größenordnung von 2.000 bis 2.500 mm einen Gegendruckzylinder mit entsprechend großem Durchmesser und Breite besitzt. Um diesen Gegendruckzylinder herum sind die einzelnen Farbwerke positioniert, die die mehrfarbige Bedruckung der Papierbahn gestatten. Vorteilhaft an diesem bekannten Verfahren ist es, daß die Arbeitsbreite der Wellpappenanlage mit der Arbeitsbreite der Rotationsdruckmaschine übereinstimmt und insoweit die bedruckten Rollen ohne weiteren Aufwand in der Wellpappenanlage eingesetzt werden können. Das in der Rotationsdruckmaschine angewendete flexografische Verfahren ermöglicht eine hohe Druckqualität, wobei Strich- und Rasterdrucke möglich sind und ein Passer garantiert ist, der besser als +/-0,1 mm ist. Nachteilig an dieser Rotationsdruckmaschine mit großer Arbeitsbreite ist es, daß für jede unterschiedliche Drucklänge ein neuer Satz Klischee-Träger-Zylinder mit der großen Arbeitsbreite erforderlich sind. Durch einen hohen Klischeebedarf werden die Druckkosten zusätzlich erhöht. Weiterhin verlangt der Betrieb dieser Rotationsdruckmaschine mit großer Arbeitsbreite lange Rüstzeiten, weil die Klischee-Träger-Zylinder mit den Klischees aufgrund ihrer Größe und ihres Gewichts kompliziert zu handhaben sind. Zusätzlich müssen die Klischees in ihrer Dicke aufeinander abgestimmt sein, so daß sich insgesamt hohe spezifische Vordruckkosten bei kleiner und mittlerer Auflagenhöhe ergeben. So kann der Zeitanteil für Rüsten und Zurichten bis zu 60 % der Gesamtarbeitszeit für das Drucken ausmachen.

Es ist weiterhin bekannt, bei der Herstellung bedruckter Wellpappe die betreffende Papierbahn in einer Rotationsdruckmaschine zu bedrucken, die mit Druckbändern arbeitet, auf denen flexible Druckplatten angeordnet sind. Eine solche Druckmaschine ist z. B. aus der DE-B- 17 61 595 bekannt. Vorteilhaft entfallen dabei die Klischeezylinder bzw. werden durch relativ preiswert herzustellende Druckbänder und Druckplatten ersetzt. Die Zugänglichkeit einer derart ausgestatteten Druckmaschine ist infolge der Ständerbauweise verbessert und es ist möglich, während des Druckens eines Auftrags eine Vorrüstung der Druckmaschine für Folgeaufträge durchzuführen, so daß der Druckvorgang auch bei Wechsel des Druckbilds nicht unterbrochen zu werden braucht. Die Vorkosten bei Verwendung einer Druckmaschine mit solchen Druckbändern sind geringer. Die Rüstkosten können entfallen. Damit ergibt sich bei Anwendung dieses Druckverfahrens eine wirtschaftliche Produktionsmöglichkeit insbesondere bei kleinen und mittleren Auflagen. Nachteilig an diesem Verfahren ist es jedoch, daß aufgrund der Ständerbauweise bei Mehrfarbendruck nur eine Passergenauigkeit von +/-0,25 mm erreicht werden kann. Deshalb sind hochqualitative Rasterdrucke nur unter Schwierigkeiten zu erzielen.

Schließlich ist es auch noch bekannt, den Bedruckungsvorgang zu einem vergleichsweise späteren Zeitpunkt durchzuführen, nämlich gleichsam nach der Wellpappenanlage. Es werden dabei die über den Längs- und Querschneider geschnittenen Bögen der Wellpappe auf einer Mehrfarben-Druckmaschine im Flexo-Direktdruck bedruckt. Vorteilhaft fallen dabei relativ geringe Fertigungskosten auch bei kleinerer Auflagenhöhe an. Die Vorkosten für die Herstellung der Klischees sind ebenfalls vergleichsweise niedrig. Die Druckzylinder, auf denen die Klischees aufgeklebt werden, sind Bestandteil der Druckmaschine. Nachteilig ist jedoch die relativ schlechte Druckqualität infolge der Kompressibilität des Wellpappen-Bogens. So ist mit diesem Verfahren ein Rasterdruck nicht möglich. Die Produktivität bei mittlerer oder großer Auflagenhöhe ist vergleichsweise gering.

Der Erfindung liegt die Aufgabe zugrunde, ein weiteres Verfahren bedruckter Wellpappe in großer Arbeitsbreite und eine hierzu geeignete Anlage bereitzustellen, mit der die bedruckte Wellpappe kostengünstiger als bisher in hoher Druckqualität erzeugt werden kann.

Erfindungsgemäß wird dies bei dem Verfahren der eingangs beschriebenen Art dadurch erreicht, daß die Teil-Deckbahnen mit vergleichsweise größerem gegenseitigen Abstand von der jeweiligen Rolle abgezogen und vor dem Kaschieren in der Wellpappenanlage in einen vergleichsweise kleineren definierten Abstand zusammengeführt werden. Der Abstand der Teil-Deckbahnen in der Wellpappenanlage wird also nicht konstant gehalten, sondern die Teil-Deckbahnen werden in einem vergleichsweise großen gegenseitigen Abstand von der jeweiligen Rolle abgezogen und in der Wellpappenanlage wird der Abstand definiert verkleinert. Dieser vergleichsweise kleinere definierte Abstand, den die Deckbahnen vor dem Kaschieren zueinander einnehmen, kann positiv oder negativ sein, sollte jedoch möglichst klein sein und die Weiterverarbeitung der Wellpappe nicht behindern. Dabei müssen die Teil-Deckbahnen getrennt voneinander behandelt werden. Der vergleichsweise größere gegenseitige Abstand kann in einem Bereich von etwa 5 bis 15 mm liegen. Der vergleichsweise kleinere definierte positive Abstand kann in der Größenordnung von 2 +/- 1 mm liegen. Unter einem positiven Abstand wird ein solcher Abstand verstanden, bei welchem keine Überlappung der beiden Teil-Deckbahnen in der Wellpappenanlage auftritt, sondern immer noch ein Abstand zwischen den einander zugekehrten Rändern der Teil-Deckbahnen besteht. Es soll hier ein Spalt bestehenbleiben, der jedoch möglichst klein sein soll, damit z. B. auf die Wellenbahn aufgetragener Leim sich nicht auf Maschinenteilen der Wellpappenanlage absetzt. Auch die weitere Verarbeitung der Wellpappenbögen, wie sie am Ende der Wellpappenanlage nach dem Längs- und Querschneider vorliegen, soll nicht behindert werden. Die Verwendung eines positiven Abstands ist auch insofern vorteilhaft, als dieser Abstand mit einem Sensor vergleichsweise leicht überprüft und mit einer Steuer- und Regeleinrichtung eingeregelt werden kann. Bei Verwendung eines negativen Abstands, bei dem sich also die beiden Teil-Deckbahnen auf der Wellenbahn mit ihren Rändern überlappen, entsteht nicht nur eine Aufdopplung in diesem Bereich, sondern diese Überlappung kann sich auch in einer nachgeschalteten Stanzeinrichtung für die Wellpappenbögen nachteilig bemerkbar machen. Es wird bei dem Zusammenführen der Teil-Deckbahnen jedoch immer so gearbeitet, daß ein größerer gegenseitiger Abstand verringert wird, und nicht etwa umgekehrt.

Besonders vorteilhaft ist es, wenn die Teil-Deckbahnen in der Wellpappenanlage auf gemeinsamer Achse von der Rolle abgezogen werden. Hierbei können übliche Abwickelstationen Verwendung finden, die in bekannter Weise auch mit einer automatischen Verbindungseinrichtung für das Ende und den Anfang aufeinanderfolgend zu verarbeitender Rollen von Teil-Deckbahnen ausgestattet sind. Die Wellpappenanlage verbleibt also im wesentlichen wie bisher und sie kann auch wahlweise anders benutzt werden, als es das vorliegende Verfahren aufzeigt. Auch bestehende Wellpappenanlagen können ohne Weiteres nach dem neuen Verfahren betrieben werden, wobei es nur geringfügiger Anpassungen bedarf.

Die Teil-Deckbahnen können unabhängig voneinander mit getrennten Spanneinrichtungen für die jeweilige Rolle aufgespannt werden und in ihrer jeweiligen Bahnspannung geregelt nebeneinander abgezogen werden. Hierbei ist zu berücksichtigen, daß die nebeneinander angewendeten Teil-Deckbahnen auch hinsichtlich der Dicke der Papierbahn schwanken können oder unterschiedlich auftreten können, so daß die Durchmesser der Rollen der eingesetzten Teil-Deckbahnen und damit die Winkelgeschwindigkeit unterschiedlich sein kann. Demzufolge ist es erforderlich, jede Teil-Deckbahn separat zu handhaben.

Das Zusammenführen kann über eine oder mehrere Streckwalzen erfolgen, die in umgekehrtem Sinn betrieben werden. In der papierverarbeitenden Industrie wie auch bei der Herstellung von Wellpappe sind Streckwalzen an sich bekannt. Es handelt sich hierbei um Walzen oder Stangen, die sich quer zur Arbeitsbreite erstrecken und eine gekrümmte Oberfläche bereitstellen. Diese gekrümmte Oberfläche wird üblicherweise im konvexen Bereich mit der betreffenden Bahn in Verbindung gebracht, so daß sie die Wirkung hat, daß die betreffende Bahn von ihrem Mittelbereich in Richtung auf die beiden Rändern gestrafft und glattgezogen wird, so daß eine Faltenbildung in der Maschine vermieden wird. Im Rahmen der vorliegenden Erfindung wird eine solche bekannte Streckwalze im umgekehrten Sinn betrieben. Dies bedeutet, daß sie mit ihrer konkaven Oberfläche mit den beiden Teil-Deckbahnen in Kontakt kommt, so daß die beiden Teil-Deckbahnen durch die Wirkung der Streckwalze einander angenähert geführt werden und sich somit der Abstand zwischen den beiden einander zugekehrten Rändern verkleinert. Für diesen Einsatz können bekannte und an der Wellpappenanlage auch vorhandene Streckwalzen benutzt werden. Wenn Papierbahnen gehandhabt werden sollen, deren Bahnbreite der großen Arbeitsbreite der Wellpappe entspricht, so kann durch einfache Umstellung der Streckwalzen auch hier ein Einsatz erfolgen. Es bedarf somit keiner neuen Arbeitsmittel, wenngleich das vorliegende Verfahren die Verwendung neuer, zusätzlicher Arbeitsmittel zum Zusammenführen mehrerer Teil-Deckbahnen nicht ausschließt.

Die Anlage zur Herstellung bedruckter Wellpappe in großer Arbeitsbreite ist mit einem Kaschierwerk ausgestattet und weist mindestens eine vorgeschaltete Rotationsdruckmaschine auf. Weiterhin weist die Wellpappenanlage mehrere - in der Regel zwei - Abwickelstationen für Teil-Deckbahnen von der Rolle auf. Erfindungsgemäß sind die Abwickelstationen jeweils mit Bahnspannungssteuerungen versehen; weiterhin ist eine Steuer- und Regeleinrichtung zum Zusammenführen der Teil-Deckbahnen auf einen bestimmten gegenseitigen Abstand zwischen Rolle und Kaschierwerk vorgesehen. Die Anzahl der Abwickelstationen richtet sich natürlich nach der Anzahl der Teil-Deckbahnen. In der einfachsten Weise können zwei Abwickelstationen mit halber Arbeitsbreite vorgesehen sein, wobei die Achsen dieser Abwickelstationen fluchtend oder parallel an der Anlage vorgesehen ist. Es ist aber ohne Weiteres auch möglich, die große Arbeitsbreite in drei Teilarbeitsbreiten zu unterteilen und demzufolge auch drei Abwickelstationen für die Teil-Deckbahnen zu verwirklichen. Jede Abwickelstation für eine Teil-Deckbahn muß mit einer Bahnspannungssteuerung ausgestattet sein, die separat auf die jeweilige Teil-Deckbahn einwirkt. Die Teil-Deckbahnen können auf der Rolle unterschiedliche Lauflänge besitzen, wobei zusätzlich auch noch unterschiedlich dicke Papierbahnen eingesetzt werden können. Es ist auch möglich, unterschiedliche Druckbilder an den einzelnen Teil-Deckbahnen innerhalb der Wellpappenanlage zu vereinen. Wichtig ist eine Steuer- und Regeleinrichtung zum Zusammenführen der Teil-Deckbahnen auf einen bestimmten gegenseitigen Abstand, der vor dem Kaschierwerk erreicht sein muß. Dabei werden die Teil-Deckbahnen auf der Rolle mit einem vergleichsweise größeren gegenseitigen Abstand eingesetzt und dann innerhalb der Wellpappenanlage auf einen möglichst kleinen gegenseitigen Abstand gebracht. Hierzu dient die Steuer- und Regeleinrichtung, deren Aufgabe es ist, die Spaltweite, also den gegenseitigen Abstand zwischen den Teil-Deckbahnen, möglichst konstant zu halten, damit die nachgeschalteten Längsschneider, Stanzen usw. ordnungsgemäß, d. h. passergenau, arbeiten können.

Die Steuer- und Regeleinrichtung weist ein oder mehrere Streckwalzen auf, deren mit den Teil-Deckbahnen in Kontakt kommende gekrümmte Oberfläche veränderbar ist. Es ist ein Sensor zur Überwachung des Abstands und zum Steuern der Krümmung der gekrümmten Oberfläche mit mindestens einer Streckwalze vorgesehen, so daß auf diese Art und Weise Unterschiede im Ausgangsabstand der Rollen der Teil-Deckbahnen zueinander ausgeglichen werden können und ein konstantes Arbeitsergebnis an der Wellpappe in großer Arbeitsbreite erreicht wird. Bei den Streckwalzen kann es sich um walzenförmige, umlaufende Körper oder auch um stillstehende, durchgebogene Stangen handeln. Die Ausbildung der Streckwalzen im Einzelnen ist bekannt. Jedoch müssen diese Streckwalzen im Rahmen der vorliegenden Erfindung im umgekehrten Sinn betrieben werden, also mit ihrer konkaven Oberfläche mit den Teil-Deckbahnen in Kontakt kommen.

Der zur Steuer- und Regeleinrichtung gehörende Sensor kann an sich an jeder geeigneten Stelle zur Überwachung des Abstands zwischen den beiden einander zugekehrten Rändern der Teil-Deckbahnen eingesetzt werden. Ein besonders geeigneter Anbringungsort wird jedoch dann erreicht, wenn der Sensor am Ende der Beklebemaschine angeordnet ist, also dort, wo die Teil-Deckbahnen fest mit den übrigen Bahnteilen der Wellpappenbahn verbunden sind.

Besonders vorteilhaft ist es, wenn die mehreren Abwickelstationen auf gemeinsamer Achse zusammengefaßt sind und einen Abwickeldorn zum unabhängigen Abwickeln mindestens zweier Teil-Deckbahnen nebeneinander vorgesehen ist, der für jede Teil-Deckbahn je eine Spanneinrichtung und eine Bremse sowie eine Lagerung für eine Teil-Deckbahn aufweist. Damit können die Aufnahmeeinrichtungen für die Abwickelstationen unverändert beibehalten bleiben und es ist auch ein wahlweiser Betrieb der Wellpappenanlage gemäß dem vorliegenden Verfahren und nach dem Stand der Technik möglich. Die Abwickelstation erfordert also keinen zusätzlichen Raum, was allerdings dann der Fall wäre, wenn mehrere Abwickelstationen für die Teil-Deckbahnen mit nur parallelen Achsen vorgesehen sind.

Die Steuer- und Regeleinrichtung für die Veränderung der Krümmung der gekrümmten Oberfläche der Streckwalze kann einen Stellmotor aufweisen, über den die Streckwalze in einen anderen Winkel um ihre Achse eingestellt wird, so daß eine anders gekrümmte Oberfläche mit den Teil-Deckbahnen in Wirkkontakt tritt. Der Stellmotor ist mit dem Sensor über eine Regelschleife verbunden, so daß hier nicht nur eine Steuereinrichtung, die an sich auch grundsätzlich möglich ist, sondern zusätzlich eine Regeleinrichtung geschaffen ist.

Die Erfindung wird anhand eines bevorzugten Ausführungsbeispiels weiter erläutert und beschrieben. Es zeigen:
- Figur 1: eine Seitenansicht des ersten Teils einer Anlage zur Herstellung bedruckter Wellpappe in großer Arbeitsbreite,
- Figur 2: einen zweiten Teil der Anlage zur Herstellung bedruckter Wellpappe in großer Arbeitsbreite,
- Figur 3: eine Seitenansicht der verwendeten Rotationsdruckmaschine,
- Figur 4: eine Darstellung eines Abwickeldorns für zwei Teil-Deckbahnen,
- Figur 5: die Darstellung des Abwickeldorns in einer Abwickelstation mit zwei Teil-Deckbahnen auf der Rolle,
- Figur 6: eine Prinzipskizze der Zusammenführung von zwei Teil-Deckbahnen mit verringertem positiven Abstand,
- Figur 7: eine Prinzipskizze der Zusammenführung von zwei Teil-Deckbahnen mit verringertem negativen Abstand und
- Figur 8: eine prinzipielle Darstellung der wesentlichen Teile der Steuer- und Regeleinrichtung.

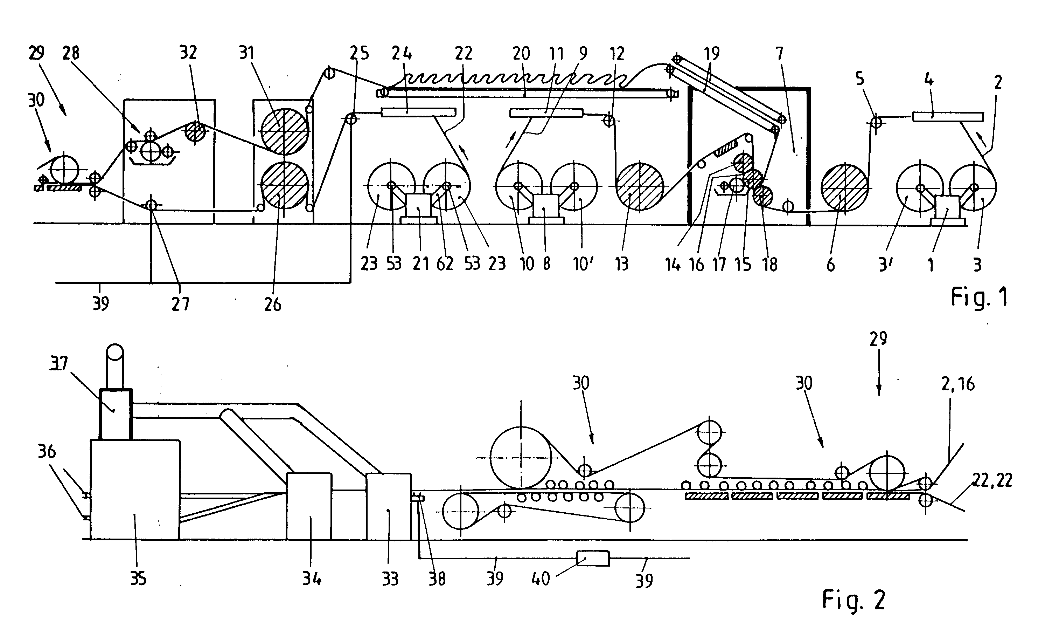

In Figur 1 ist der erste Teil der Wellpappenanlage dargestellt. Von einer Abwickelstation 1 wird eine Oberbahn 2 von der Rolle 3 abgezogen und einer Einrichtung 4 zum automatischen Verbinden des Endes der Oberbahn 2 der Rolle 3 mit dem Anfang einer Rolle 3' zugeführt. Die Oberbahn 2 gelangt über eine Umlenkwalze 5 und einen Heizzylinder 6 in ein Wellaggregat 7.

Von einer Abwickelstation 8 wird eine zu wellende Bahn 9 von der Rolle 10 gezogen und gelangt über eine Einrichtung 11, die die gleiche Funktion wie die Einrichtung 4 hat, eine Umlenkwalze 12 und einen Heizzylinder 13 ebenfalls zum Wellaggregat 7. Aus der Bahn 9 wird vermittels zweier auf dem Umfang zahnradartig ineinandergreifender Walzen 14 und 15 eine Wellenbahn 16 geformt, die auf den Wellenbergen mit einer Beleimungsstation 17 beleimt und mit der Oberbahn 2 im Bereich einer Anpreßwalze 18 zusammengeführt wird. Über eine Fördereinrichtung 19 werden die Oberbahn 2 und die Wellenbahn 16, die aneinander haften, als einseitige Wellpappe in Schlaufen gelegt und über einen Förderer 20 weiterbefördert.

Von einer Abwickelstation 21 werden als Unterbahn zwei nebenanderliegende Teil-Deckbahnen 22 von der Rolle 23 abgezogen und gelangen über eine Einrichtung 24 zum automatischen Verbinden der Enden zu einer Streckwalze 25, deren Ausbildung und Bedeutung nachfolgend im Einzelnen noch erklärt wird. Vermittels der Streckwalze 25 wird der Abstand zwischen den beiden Teil-Deckbahnen 22 verringert. Die beiden Teil-Deckbahnen 22 laufen über einen Heizzylinder 26 zu einer zweiten Streckwalze 27, die in oder vor einer Beleimungsstation 28 angeordnet ist. Die Beleimungsstation 28 ist Bestandteil eines Kaschierwerks 29, zu der weiterhin eine Heiz- und Zugpartie 30 gehört, deren Anfang in Figur 1 dargestellt ist.

Über einen Heizzylinder 31 und eine Umlenkwalze 32 gelangt die mit der Oberbahn 2 verbundene Wellenbahn 16 in die Beleimungsstation 28, wo die freien Berge der Wellenbahn 16 beleimt werden. Im Bereich der Heiz- und Zugpartie 30 kommen die beiden Teil-Deckbahnen 22, die halbe Arbeitsbreite aufweisen mögen, nebeneinanderliegend in einem bestimmten definierten Abstand mit der gemeinsamen Bahn aus Oberbahn 2 und Wellenbahn 16 in Kontakt, wobei die Oberbahn 2 und die Wellenbahn 16 über die gesamte Arbeitsbreite durchgehen, also große Arbeitsbreite aufweisen.

Figur 2 setzt Figur 1 fort und zeigt die Zusammenführung der Bahnen 2, 16, 22 und 22 am Beginn der Heiz- und Zugpartie 30. Nachgeschaltet ist noch zumindest ein wahlweise benutzbares Rillaggregat 33, ein oder mehrere Längsschneider 34 sowie mindestens zwei Querschneider 35, so daß am Ende der Wellpappenanlage die einzelnen Wellpappenbögen 36 aufgestapelt vorliegen. Zweckmäßig ist eine Absaugung 37 für Randbeschnitt vorgesehen. Zwischen Heiz- und Zugpartie 30 und dem Längsschneider 34 ist zweckmäßig ein Sensor 38 angeordnet, der die Spaltweite, also den Abstand der einander zugekehrten Ränder der Teil-Deckbahnen 22 und 22 an der Wellpappenbahn überwacht. Eine Regelschleife 39 in Form entsprechender Leitungen führt über eine Steuer- und Regeleinrichtung 40 weiter zu der ersten Streckwalze 25 und/oder der zweiten Streckwalze 27.

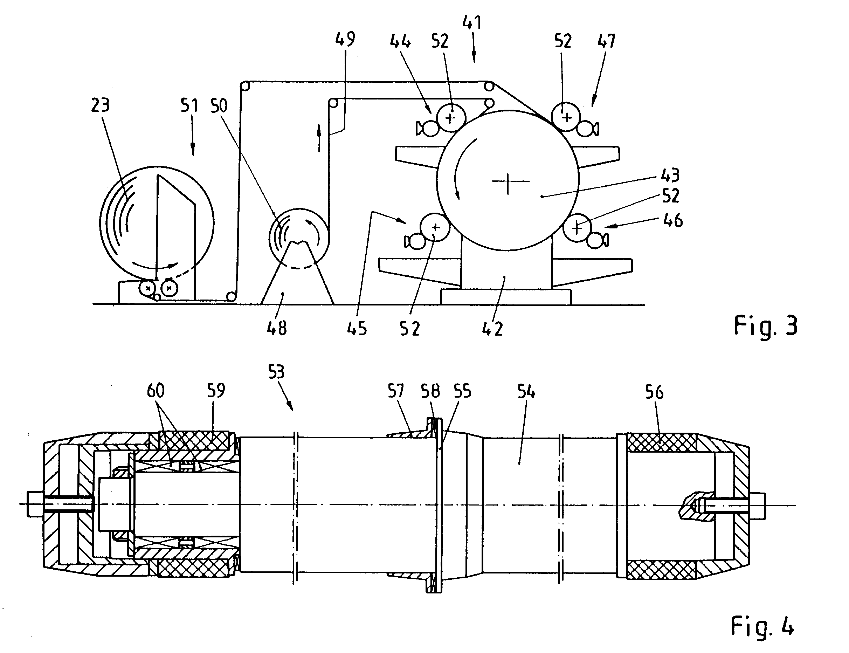

Figur 3 zeigt die in Verbindung mit der Wellpappenanlage der Figuren 1 und 2 eingesetzte Rotationsdruckmaschine 41. Die Rotationsdruckmaschine 41 weist einen Maschinenrahmen 42 auf, auf dem ein Gegendruckzylinder 43 angeordnet ist. Es sind hier vier Farbwerke 44, 45, 46 und 47 über den Umfang des Gegendruckzylinders 43 verteilt angeordnet, so daß hier mit vier unterschiedlichen Druckfarben gedruckt werden kann. Von einer Abrollstation 48 wird die Papierbahn 49 von der Rolle 50 abgezogen und über die vier Farbwerke 44, 45, 46 und 47 bedruckt und schließlich in einer Aufwickelstation 51 zu der Rolle 23 bzw. 23' aufgerollt. Die gesamte Rotationsdruckmaschine 41 ist im Vergleich zur Wellpappenanlage mit einer Teilarbeitsbreite ausgebildet. So kann beispielsweise die Rotationsdruckmaschine 41 für die halbe Arbeitsbreite der Wellpappenanlage ausgelegt sein und damit das Bedrucken von Papierbahnen 49 mit einer Breite von etwa 1,3 m gestatten, während auf der Wellpappenanlage gemäß den Figuren 1 und 2 die Gesamtarbeitsbreite, also die große Arbeitsbreite, etwa 2,5 m beträgt. Es versteht sich, daß der Gegendruckzylinder 43 und die Klischeezylinder 52 der Farbwerke 44, 45, 46 und 47 ebenfalls auf Teilarbeitsbreite eingerichtet sind. Die Rotationsdruckmaschine 41 gestattet es somit vorteilhaft, auch hochqualitative Rasterdrucke zu erstellen, bei denen die Passergenauigkeit < +/-0,1 mm ist.

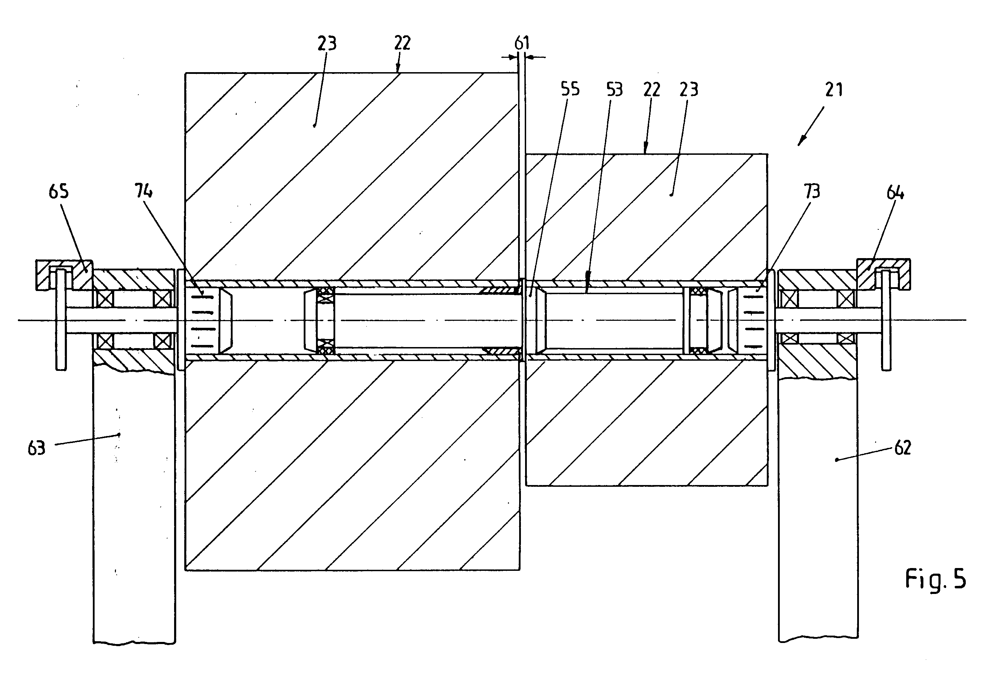

In Figur 4 ist ein Abwickeldorn 53 dargestellt, der dann Anwendung findet, wenn in einer Abwickelstation 21 zwei Teil-Deckbahnen 22 nebeneinander, also mit fluchtender Achse, abgewickelt werden. Der Abwickeldorn 53 weist eine Welle 54 auf, die eine Bordscheibe 55 besitzt, gegen die der innere Rand der einen Teil-Deckbahn 22 gespannt wird. Zum Festspannen der Hülse dieser Teil-Deckbahn 22 dient eine Spanneinrichtung 56.

Eine Bordscheibe 57 ist Bestandteil eines Gleitlagers und mit Hilfe eines Axiallagers 58 drehbar auf der Welle 54 gelagert. Hierzu gehört eine Spanneinrichtung 59, die frei drehbar über ein Lager 60 auf der Welle 54 vorgesehen ist. Diese Teile sind der anderen Teil-Deckbahn 22 zugeordnet.

Figur 5 verdeutlicht noch einmal die Anwendung des Abwickeldorns 53 und verdeutlicht gleichzeitig die beiden Teil-Deckbahnen 22 mit u. U. unterschiedlichen Durchmessern, die jeweils auf der Rolle 23 sitzen und eingesetzt werden. Zwischen den beiden Rollen 23 befindet sich ein Abstand 61, der u. a. von der Breite der Bordscheiben 55 und 57 und des Axiallagers sowie von sonstigen Parametern abhängig ist. Der Abwickeldorn 53 ist auch hier mit den zwei separaten Spanneinrichtungen 56 und 59 versehen, in Armen 62 und 63 der Abwickelstation 21 gelagert und zu beiden Seiten mit je einer Bremse 64 und 65 versehen. Spannköpfe 73 bzw. 74 greifen an den Hülsen der Rollen 23 an und stehen mit den Bremsen 64 bzw. 65 in Verbindung. Damit können die Bahnspannungen der beiden Teil-Deckbahnen 22 nebeneinander separat voneinander gesteuert werden.

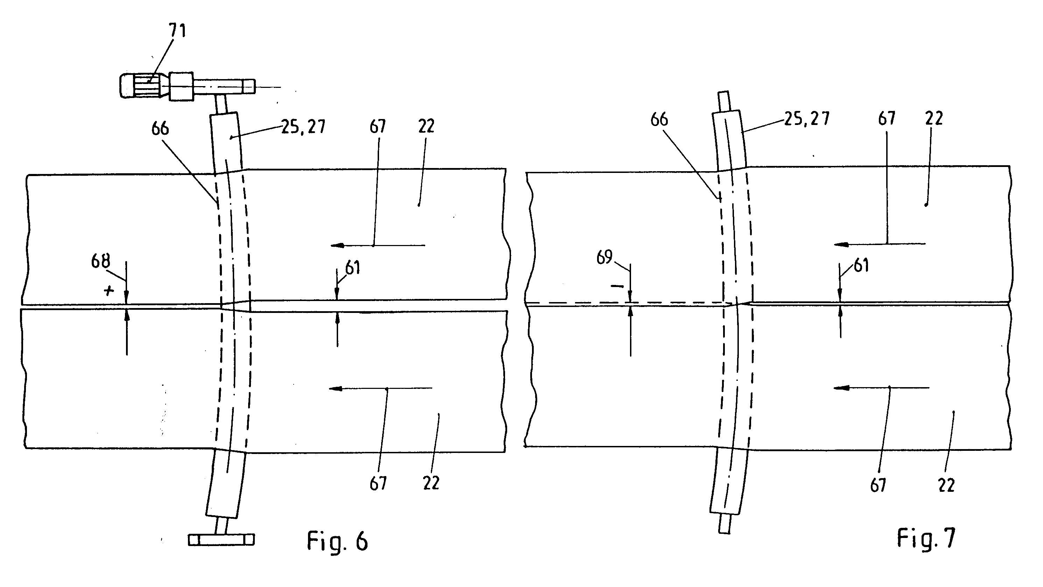

Die Figuren 6 und 7 verdeutlichen die prinzipielle Wirkungsweise der Streckwalze 25 oder 27, wie sie zum Zweck der vorliegenden Erfindung ausgenutzt wird. Die Streckwalze 25 und/oder die Streckwalze 27 ist mit ihrer Krümmung so ausgerichtet angeordnet, daß die konkave Oberfläche 66 mit den beiden Teil-Deckbahnen 22, die gemäß den beiden Pfeilen 67 zugeführt werden, in Kontakt kommt. Infolgedessen werden die beiden Teil-Deckbahnen 22 nicht nach außen gestrafft, sondern aufeinander zugeführt. Der Zulauf der beiden Teil-Deckbahnen erfolgt im Abstand 61, der in der Größenordnung von 5 bis 15 mm, aber auch außerhalb des Bereichs liegen kann. Durch die beschriebene umgekehrte Benutzung der Streckwalzen 25 bzw. 27 liegt nach dem Kontakt der Teil-Deckbahnen 22 mit der konkaven Oberfläche 66 ein kleinerer Abstand 68 vor, der gemäß Figur 6 immer noch als positiver Spalt zu sehen ist. Dieser Spalt soll möglichst klein sein und kann in der Größenordnung 2 +/- 1 mm liegen. Es ist aber auch möglich, wie Figur 7 zeigt, daß die beiden Teil-Deckbahnen 22 unter Überlappung über die Streckwalze 25 geführt werden, so daß hier ein negativer Abstand 69 entsteht. Auch ein solcher negativer Abstand ist nicht hinderlich. Er verkompliziert die Abstandsmessung und wirkt sich in nachgeschalteten Arbeitswerkzeugen dann nicht nachteilig aus, wenn es gelingt, diesen Abstand 69 während der Produktion konstantzuhalten. Bevorzugt wird allerdings ein positiver Abstand 68, der möglichst gegen Null geht.

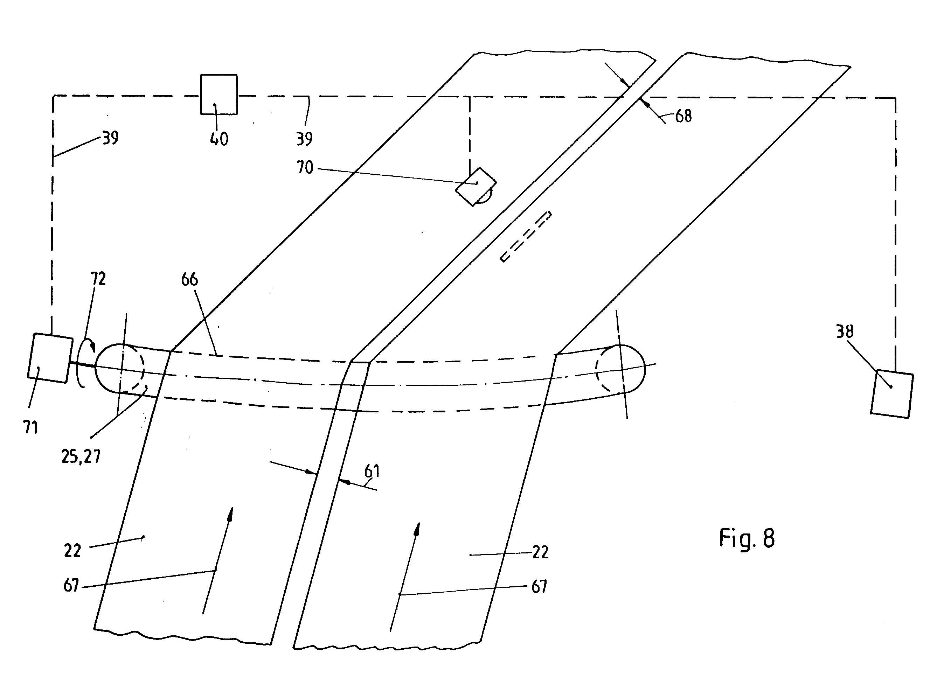

Figur 8 verdeutlicht noch einmal die Regelschleife. Es ist ein Sensor 38 vorgesehen, der als fotoelektrisches Element ausgebildet sein kann und eine Ist-Messung und digitale Anzeige des Abstands 68 anzeigt. Statt des Sensors 38 am Ende der Heiz- und Zugpartie 30 kann auch ein Sensor 70 unmittelbar nach der Streckwalze 25 bzw. 27 vorgesehen sein. Über eine Regelschleife 39 und die Steuer- und Regeleinrichtung 40 besteht Anschluß an einen Stellmotor 71, über den die Achse der Streckwalze 25 bzw. 27 gemäß Pfeil 72 verstellt wird, so daß andere, mehr oder weniger gekrümmte Bereiche der Oberfläche 66 mit den beiden Teil-Deckbahnen 22 in Kontakt kommen und dadurch die Reduzierung des Abstands 61 auf den Abstand 68 verändert wird.

### Bezugszeichenliste:

- 1: = Abwickelstation
- 2: = Oberbahn
- 3: = Rolle
- 4: = Einrichtung
- 5: = Umlenkwalze
- 6: = Heizzylinder
- 7: = Wellaggregat
- 8: = Abwickelstation
- 9: = zu wellende Bahn
- 10: = Rolle
- 11: = Einrichtung
- 12: = Umlenkwalze
- 13: = Heizzylinder
- 14: = Walze
- 15: = Walze
- 16: = Wellenbahn
- 17: = Beleimungsstation
- 18: = Anpreßwalze
- 19: = Fördereinrichtung
- 20: = Förderer
- 21: = Abwickelstation
- 22: = Teil-Deckbahn
- 23: = Rolle
- 24: = Einrichtung
- 25: = Streckwalze
- 26: = Heizzylinder
- 27: = Streckwalze
- 28: = Beleimungsstation
- 29: = Kaschierwerk
- 30: = Heiz- und Zugpartie
- 31: = Heizzylinde
- 32: = Umlenkwalze
- 33: = Rillaggregat
- 34: = Längsschneider
- 35: = Querschneider
- 36: = Wellpappenbogen
- 37: = Absaugung
- 38: = Sensor
- 39: = Regelschleife
- 40: = Steuer- und Regeleinrichtung
- 41: = Rotationsdruckmaschine
- 42: = Maschinenrahmen
- 43: = Gegendruckzylinder
- 44: = Farbwerk
- 45: = Farbwerk
- 46: = Farbwerk
- 47: = Farbwerk
- 48: = Abrollstation
- 49: = Papierbahn
- 50: = Rolle
- 51: = Aufwickelstation
- 52: = Klischeezylinder
- 53: = Abwickeldorn
- 54: = Welle
- 55: = Bordscheibe
- 56: = Spanneinrichtung
- 57: = Bordscheibe
- 58: = Axiallager
- 59: = Spanneinrichtung
- 60: = Lager
- 61: = Abstand
- 62: = Arm
- 63: = Arm
- 64: = Bremse
- 65: = Bremse
- 66: = konkave Oberfläche
- 67: = Pfeil
- 68: = Abstand
- 69: = Abstand
- 70: = Sensor
- 71: = Stellmotor
- 72: = Pfeil
- 73: = Spannkopf
- 74: = Spannkopf

## Patentansprüche

1. Verfahren zur Herstellung bedruckter Wellpappe in großer Arbeitsbreite, in dem die äußere Deckbahn vor dem Kaschieren in einer Rotations-Druckmaschine in einem vorgeschalteten Arbeitsschritt bedruckt und in der Wellpappenanlage von der Rolle abgezogen und den anderen Bahnteilen in einer Beklebemaschine hinzugefügt wird, wobei mehrere - in der Regel zwei - äußere Teil-Deckbahnen (22, 22), die Teilarbeitsbreite aufweisen und sich zur Arbeitsbreite ergänzen, bedruckt, gemeinsam in der Wellpappenanlage von der Rolle (23, 23; 23', 23') abgezogen und gemeinsam kaschiert werden, dadurch gekennzeichnet, daß, die Teil-Deckbahnen (22, 22) mit vergleichsweise größerem gegenseitigen Abstand (61) von der jeweiligen Rolle abgezogen und vor dem Kaschieren in der Wellpappenanlage in einen vergleichsweise kleineren definierten Abstand (68, 69) zusammengeführt werden.

2. Verfahren nach Anspruch 1, dadurch gekennzeichnet, daß die Teil-Deckbahnen (22, 22) in einen positiven Abstand (68) zusammengeführt werden.

3. Verfahren nach Anspruch 1 oder 2, dadurch gekennzeichnet, daß die Teil-Deckbahnen (22, 22) in der Wellpappenanlage auf gemeinsamer Achse von der Rolle (23, 23 oder 23', 23') abgezogen werden.

4. Verfahren nach Anspruch 1, 2 oder 3, dadurch gekennzeichnet, daß die Teil-Deckbahnen (22, 22) unabhängig voneinander mit getrennten Spanneinrichtungen (56, 59) für die jeweilige Rolle aufgespannt und in ihrer jeweiligen Bahnspannung geregelt nebeneinander abgezogen werden.

5. Verfahren nach Anspruch 1 oder 2, dadurch gekennzeichnet, daß das Zusammenführen über eine oder mehrere Streckwalzen (25, 27) erfolgt, die in umgekehrtem Sinn betrieben werden.

6. Anlage zur Herstellung bedruckter Wellpappe in großer Arbeitsbreite zur Durchführung des Verfahrens nach einem der Ansprüche 1 bis 5, mit einem Kaschierwerk (28) und mit mindestens einer vorgeschalteten Rotationsdruckmaschine (41), wobei die Wellpappenanlage mehrere - in der Regel zwei - Abwickelstationen für Teil-Deckbahnen (22, 22) von der Rolle aufweist, dadurch gekennzeichnet, daß die Abwickelstationen jeweils mit Bahnspannungssteuerungen versehen sind, und daß eine Steuer- und Regeleinrichtung (40) zum Zusammenführen der Teil-Deckbahnen (22, 22) auf einen bestimmten gegenseitigen Abstand (68, 69) zwischen Rolle und Kaschierwerk vorgesehen ist.

7. Anlage nach Anspruch 6, dadurch gekennzeichnet, daß die Steuer- und Regeleinrichtung (40) ein oder mehrere Streckwalzen (25, 27) aufweist, deren mit den Teil-Deckbahnen in Kontakt kommende gekrümmte Oberfläche (66) veränderbar ist, und daß ein Sensor (38, 70) zur Überwachung des Abstands (68, 69) und zum Steuern der Krümmung der gekrümmten Oberfläche (66) mindestens einer Streckwalze (25 ode 27) vorgesehen ist.

8. Anlage nach Anspruch 7, dadurch gekennzeichnet, daß der Sensor (38) am Ende der Beklebemaschine (29) angeordnet ist.

9. Anlage nach Anspruch 6, dadurch gekennzeichnet, daß die mehreren Abwickelstationen (21) auf gemeinsamer Achse zusammengefaßt sind und einen Abwickeldorn (53) zum unabhängigen Abwickeln mindestens zweier Teil-Deckbahnen (22, 22) nebeneinander vorgesehen ist, der für jede Teil-Deckbahn je eine Spanneinrichtung (56, 59) und eine Bremse (64, 65) sowie eine Lagerung für die Teil-Deckbahn aufweist.

10. Anlage nach Anspruch 7, dadurch gekennzeichnet, daß die Steuer- und Regeleinrichtung (40) für die Veränderung der Krümmung der gekrümmten Oberfläche der Streckwalze einen Stellmotor (71) aufweist, der mit dem Sensor (38, 70) über eine Regelschleife (39) verbunden ist.

## Claims

1. A method for the manufacture of printed corrugated paperboard of a large width, in which the outer coating paper is first printed in a rotational printing machine prior to lamination, then pulled off of a supply roll in a corrugator line and joined to additional paper runs within a lamination station, with a plurality, generally two, outer split runs (22, 22) where all of the split runs joined together are of the approximate width of the corrugator line, each split run having previously been printed separately from the other in the rotational printing machine, and simultaneously pulled off their respective supply rolls in the corrugator line and then laminated, **characterized**, in that the split runs (22, 22) are pulled off their respective supply rolls with a spaced gap relative to one another and are then guided together prior to being laminated in the corrugator line with a resulting gap (68, 69) which is relatively narrower than the spaced gap prior to lamination.

2. The method of claim 1, **characterized**, in that the split runs (22, 22) are guided together with a resulting positive gap (68).

3. The method of claim 1 or 2, **characterized**, in that the supply rolls (23, 23 or 23', 23') of the split runs (22, 22) are supported on a common spindle as the split runs are pulled off of their respective supply rolls.

4. The method of claims 1, 2 or 3, **characterized**, in that the split runs (22, 22) are supported independently of each other by fastening devices (56, 59), and are pulled off of their respective supply rolls side by side under controlled tension.

5. The method of claim 1 or 2, **characterized**, in that the split runs are guided toward each other by one or more guide roller assemblies (25, 27), said guide roller assemblies being used on their concave sides.

6. An apparatus for the manufacture of corrugated paperboard of a large width according to the method of any one of previous claims 1 to 5, having at least one rotational printing machine (41) and a corrugator line, the corrugator line including a glue application station (28) and a plurality, generally two, of paper supply stations for a plurality of split runs (22, 22), each split run being pulled off its respective supply roll, **characterized**, in that said paper supply stations each comprise tension control means, and a control unit (40) positioned between each supply roll and the laminating device, wherein the split runs (22, 22) are guided toward each other so that a predetermined gap (68, 69) results therefrom.

7. The apparatus of claim 6, **characterized**, in that said control unit (40) comprises one or more guide roller assemblies (25, 27), the surfaces (66) of said guide roller assemblies being adjustable, and a sensor (38, 70) for detecting the width of gap (68, 69) and for controling the curvature of the surface (66) of at least one of the guide roller assemblies (25, 27).

8. The apparatus of claim 7, **characterized**, in that said sensor (38) is fixed in position with respect to the lamitating device (29).

9. The apparatus of claim 6, **characterized**, in that said paper supply stations (21) include a common axis, a spindle (53), a plurality of fastening devices (56, 59), a plurality of brakes (64, 65), and at least one bearing, wherein said paper supply stations are adapted to support said supply rolls as the supply runs (22, 22) are pulled off of the supply stations.

10. The apparatus of claim 7, **characterized**, in that said control unit (40) for adjusting the curvature of the guide roller assemblies comprises a control motor (71), said motor being connected to the sensor (38, 70) by a control circuit (39).

## Revendications

1. Procédé de fabrication de carton ondulé imprimé en grande largeur de travail, dans lequel la laize de couverture extérieure est imprimée avant le collage dans une presse à imprimer rotative dans une opération préalable et est déroulée de la bobine dans le train onduleur et jointe aux autres parties de la laize dans une machine à coller, plusieurs laizes partielles de couverture extérieure, généralement au nombre de deux, (22, 22) présentant la largeur partielle de travail et se complétant pour former la largeur de travail étant imprimées, dévidées conjointement dans le train onduleur à partir de la bobine (22, 23; 23', 23') et collées conjointement,
**caractérisé** en ce que les laizes partielles de couverture (22, 22) sont déroulées de la bobine respective avec entre elles un espacement (61) relativement plus grand et sont rapprochées ensemble avant le collage dans le train onduleur vers un espacement bien défini (68, 69) comparativement plus petit.

2. Procédé selon la revendication 1, caractérisé en ce que les laizes partielles de couverture (22, 22) sont guidées ensemble avec un espacement (68) positif.

3. Procédé selon la revendication 1 ou 2, caractérisé en ce que les laizes partielles de couverture (22, 22) sont déroulées de la bobine (23, 23 ou 23', 23') dans le train onduleur sur un axe commun.

4. Procédé selon la revendication 1, 2 ou 3, caractérisé en ce que les laizes partielles de couverture (22, 22) sont tendues indépendamment l'une de l'autre au moyen de dispositifs tendeurs (56, 59) séparés pour la bobine respective et sont déroulées côte à côte de manière régulée dans leur tension de laize respective.

5. Procédé selon la revendication 1 ou 2, caractérisé en ce que le guidage conjoint a lieu sur un ou plusieurs rouleaux étireurs (25, 27) qui fonctionnent de manière inversée.

6. Installation de fabrication de carton ondulé imprimé en grande largeur de travail, pour la mise en oeuvre du procédé selon une des revendications 1 à 5, avec une machine colleuse (28) et avec au moins une presse à imprimer rotative (41) disposée en amont, le train onduleur présentant plusieurs - en général deux - stations de déroulage des laizes partielles de couverture (22, 22) à partir de la bobine,
**caractérisée** en ce que les stations de déroulage sont munies respectivement de dispositifs de commande de tension de la laize, et en ce qu'il est prévu un dispositif (40) de commande et de régulation pour le rapprochement des laizes partielles de couverture (22, 22) dans un espacement mutuel (68, 69) déterminé entre la bobine et la machine colleuse.

7. Installation selon la revendication 6, caractérisée en ce que le dispositif (40) de commande et de régulation présente un ou plusieurs rouleaux étireurs (25, 27) dont la surface courbée (66) venant en contact avec les laizes partielles de couverture est modifiable, et en ce qu'il est prévu un capteur (38, 70) pour surveiller l'espacement (68, 69) et pour commander la courbure de la surface courbée (66) d'au moins un rouleau étireur (25 ou 27).

8. Installation selon la revendication 7, caractérisée en ce que le capteur (38) est disposé à la fin de la machine à coller (29).

9. Installation selon la revendication 6, caractérisée en ce que les diverses stations de déroulage (21) sont réunies sur un arbre commun et un mandrin de déroulage (53) est prévu pour le déroulage indépendant d'au moins deux laizes partielles de couverture (22, 22) côte à côte, lequel mandrin présente pour chaque laize partielle de couverture un dispositif de serrage (56, 59) et un frein (64, 65) ainsi qu'un support à rotation pour la laize partielle de couverture.

10. Installation selon la revendication 7, caractérisée en ce que le dispositif (40) de commande et de régulation présente un moteur de réglage (71) pour faire varier la courbure de la surface courbe du rouleau étireur, ce moteur étant relié au capteur (38, 70) par une boucle de régulation (39).
